Europäisches Patentamt

European Patent Office

Office européen des brevets

(11) Publication number: 0 253 900 B1

# EUROPEAN PATENT SPECIFICATION

(45) Date of publication of patent specification: 29.09.93    (51) Int. Cl.5: G05B 19/403

(21) Application number: 87900871.2

(22) Date of filing: 16.01.87

(86) International application number:
PCT/JP87/00023

(87) International publication number:
WO 87/04535 (30.07.87 87/17)

(54) METHOD FOR FORMING CURVED SURFACES.

(30) Priority: 16.01.86 JP 6785/85

(43) Date of publication of application:
27.01.88 Bulletin 88/04

(45) Publication of the grant of the patent:
29.09.93 Bulletin 93/39

(84) Designated Contracting States:
DE FR GB

(56) References cited:
EP-A-00 041 854
JP-A-00 575 109
JP-A-06 015 710
JP-A-58 149 507

(73) Proprietor: FANUC LTD.
3580, Shibokusa Aza-Komanba, Oshino-mura
Minamitsuru-gun, Yamanashi 401-05(JP)

(72) Inventor: SEKI, Masaki
3-15-2-406, Takaido-nishi Suginami-ku
Tokyo 168(JP)
Inventor: SAMUKAWA, Kouji
Fanuc Utsugi-ryo 217 386-1, Ishikawa-cho
Hachioji-shi Tokyo 192(JP)
Inventor: HOSONO, Takeshi
Fanuc Utsugi-ryo 218 386-1, Ishikawa-cho
Hachioji-shi Tokyo 192(JP)

(74) Representative: Billington, Lawrence Emlyn et
al
HASELTINE LAKE & CO Hazlitt House 28
Southampton Buildings Chancery Lane
London WC2A 1AT (GB)

## EP 0 253 900 B1

**Description**

This invention relates to a method of creating curved surfaces and, more particularly, to a method of machining the edge surface of a part whose upper and lower surfaces differ in shape.

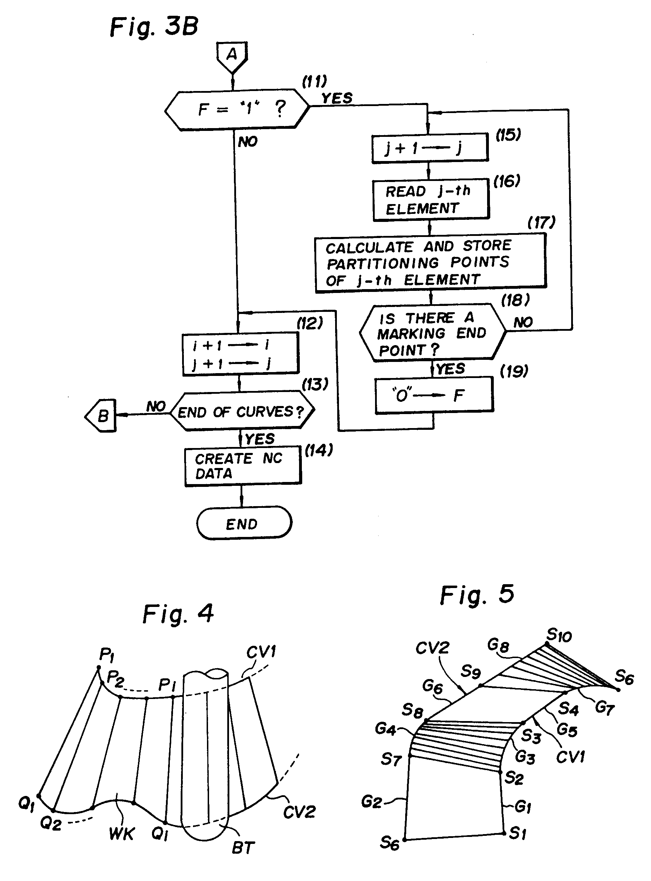

As shown in Fig. 4, a known method of creating a curved edge surface of a part WK whose upper and lower surfaces differ in shape includes inputting first and second curves CV1, CV2, obtaining corresponding points $P_i$, $Q_i$ on the first and second curves, and connecting these corresponding points. More specifically, the curved surface of the part WK is created (machined) by obtaining the corresponding point $P_i$, $Q_i$, preparing NC data in such a manner that the corresponding points $P_i$, $Q_i$ are traversed simultaneously, and moving a tool BT on the basis of the NC data. Methods of thus creating the curved surface of a part by giving two curves are disclosed in the specification of U.S.P. 4,559,601 "Numerically Controlled Milling Method", the specification of U.S. Serial No. 624,676 "Wire-Cut Taper Machining Method", filed in the U.S.A. on June 19, 1984, and in the specification of U.S. Serial No. 732,010 "Wire Discharge Machining Method", filed in the U.S.A on April 29, 1985 (US 4 703 146).

Fig. 5 is a view for describing a conventional method of creating a curved edge surface. CV1 and CV2 denote first and second curves for specifying the shapes of upper and lower surfaces, $G_1$, $G_3$, $G_5$, $G_7$, ... denote elements on the first curve, and $G_2$, $G_4$, $G_6$, $G_8$ denote elements on the second curve. The elements $G1$, $G_2$; $G_3$, $G_4$; $G_5$, $G_6$; $G_7$, $G_8$;... correspond to each other. In such case, the curves CV1, CV2 and a partitioning pitch (mm) are defined as follows:

CV1 = $S_1$; $S_2$; C ($x_1$,$y_1$,$r_1$), CW, $S_3$; $S_4$; C ($x_2$,$y_2$,$r_2$) CW, $S_5$;...

CV2 = $S_6$; $S_7$; C ($x_3$,$y_3$,$r_3$), CW, $S_8$; $S_9$; $S_{10}$;... CUT P,5;

$S_i$ (i = 1, 2, ...) indicates the end point of a figure element which is a line segment or circular arc, and C a circular arc. The $x_i$,$y_i$,$z_i$ in the parentheses indicate the center and radius of the circular arc, CW indicates a circular arc in the clockwise direction, and ";" indicates the end of a block. The pitch in a base line direction along the first and second curves is specified by the numerical value following the word address P indicative of the partitioning pitch.

When definition statements and partitioning information concerning the first and second curves CV1, CV2 have been entered, an apparatus for creating a curved surface successively calculates corresponding points on the first and second curves and, on the basis of the results of the calculations, creates NC data in such a manner that the corresponding points will be traversed simultaneously.

Depending upon the curved surface, there are cases where a curved surface includes an edge portion in which the starting point or terminal point of one element on one of the curves corresponds to all points on at least one element of the other curve.

However, the conventional curved surface creation method is such that elements on the first curve always correspond to elements on the second curve and, as a result, a curved surface having the aforementioned edge portion cannot be specified.

Accordingly, an object of the present invention is to provide a curved surface creation method through which a curved surface can be created simply and reliably even if the curved surface includes an edge portion in which one point on one curve for specifying the upper or lower surface of a workpiece corresponds to a plurality of points on the other curve.

Disclosure of the Invention

This invention, which is defined in claim 1, includes a curved surface creation method for creating the part figure, whose upper and lower surfaces differ in shape, by inputting first and second curves specifying the shapes of the upper and lower surfaces of the workpiece, obtaining corresponding points on the first and second curves, and connecting the corresponding points. More particularly, the invention relates to a method of creating a curved surface having a special edge portion.

In the present invention, if one point on one curve of first and second curves constituted by figure elements, which are line segments or circular arcs, corresponds to all points on at least one figure element of the other curve, the correspondence between the point on the one curve and the figure element on the other curve is inputted upon being specified in the curve definition statement. Thereafter, the figure element on the other curve corresponding to the point on the one curve is partitioned into a predetermined number of segments, and the edge portion is formed by connecting the point with all of the partitioning points.

Further details of the present invention are specified in claim 1.

In accordance with this method, a curved surface can be created simply and reliably even if the curved surface includes an edge portion in which one point on one curve for specifying the upper or lower surface of a workpiece corresponds to a plurality of points on the other curve.

2

Brief Description of the Drawings

Fig. 1 is a view for describing the general features of the invention, in which Fig. 1A is a perspective view, Fig. 1B is a view showing the shape of an upper surface, and Fig. 1C is a view showing the shape of a lower surface;

Fig. 2 is a block diagram of a curved surface creation apparatus for realizing the invention;

Fig. 3 is a flowchart of processing according to the invention; and

Figs. 4 and 5 are views for describing the background of the invention.

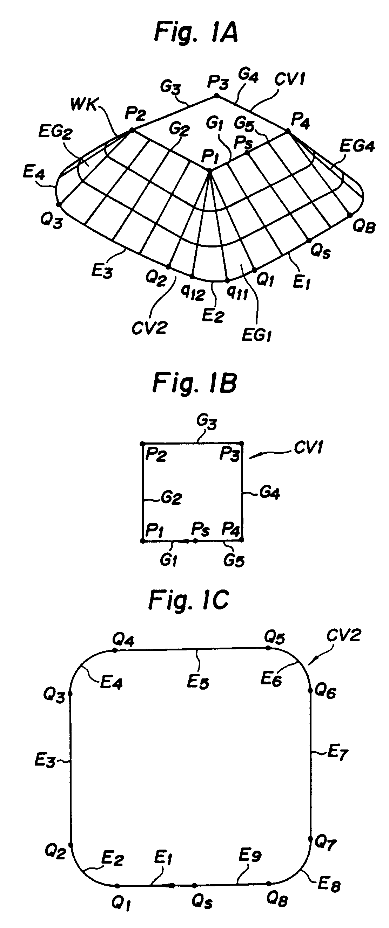

In Fig. 1, CV1 denotes a first curve specifying the shape (ie periphery) of the upper surface of a part WK, CV2 denotes a second curve specifying the shape (ie periphery) of the lower surface of the part, $G_i$ (i = 1 ~ 5) denotes a figure element on the first curve, and $E_j$ (j = 1 ~ 9) denotes a figure element on the second curve. It should be noted that the figure elements include linear elements (line segments) and circular arcs.

The first and second curves CV1, CV2 are defined by aligning the figure elements $G_1 \sim G_5$, $E_1 \sim E_9$ in the order of traversal starting from starting points $P_s$, $Q_s$. If a point $P_1$ on the one curve CV1 corresponds to all points on at least one figure element $E_2$ (circular arc $Q_1 Q_2$) on the other curve, the correspondence between the point $P_1$ on the one curve and the figure element $E_2$ on the other curve will be specified in a curve definition statement.

When generating the curved surface, the element $E_2$ on the other curve corresponding to the point $P_1$ on the one curve CV1 is partitioned into a predetermined number of segments decided on the basis of separately provided partitioning information, and an edge portion EG1 is formed by connecting the point $P_1$ and all of the partitioning points $Q_1$, $q_{11}$, $q_{12}$, $Q_2$.

When milling is performed, NC data are created in such a manner that the corresponding points on the first and second curves CV1, CV2 are traversed simultaneously, and a tool is moved on the basis of the NC data to generate the curved surface.

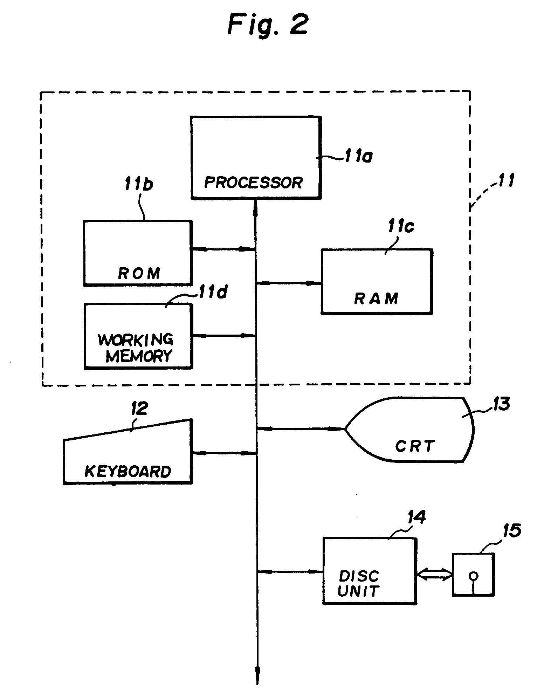

Fig. 2 is a block diagram of a curved surface creation apparatus for realizing the invention. Numeral 11 denotes a controller body, 12 a keyboard, 13 a CRT, 14 an input/output unit such as a disc unit, and 15 a floppy disc. The controller body 11 has a processor 11a, a ROM 11b, a RAM 11c and a working memory 11d.

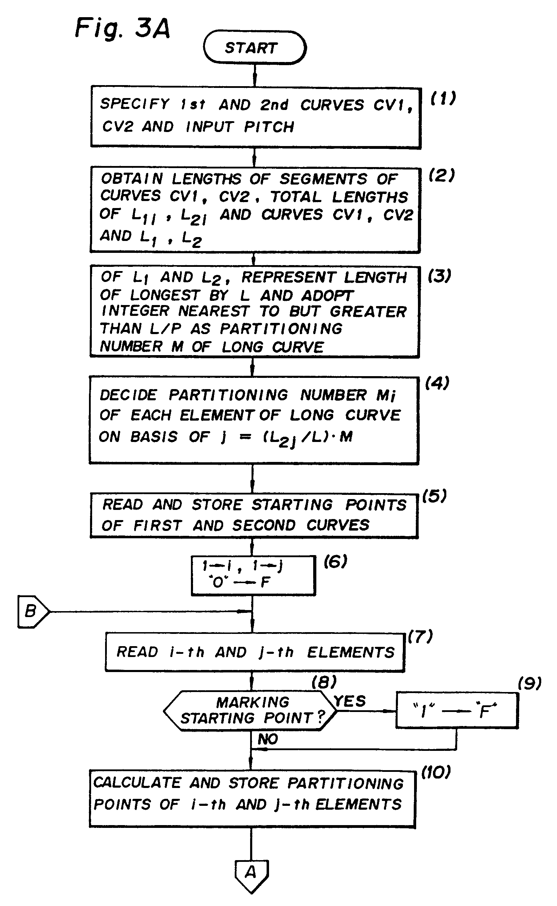

Fig. 3 is a flowchart of processing according to the invention. The curved surface creation method of the invention will now be described in accordance with Figs. 1 through 3.

(1) The first step is to specify the end points of the elements $G_i$, $E_i$ (i = 1, 2,...) forming the first and second curves CV1, CV2, respectively. It should be noted that an end point is the starting point or terminal point of the figure element.

Thereafter, curve definition statements specifying the first and second curves CV1, CV2 and the pitch, which is the pitch information, are inputted. The curve definition statement and pitch definition statement are as follows, using Fig. 1 as an example. Note that points $P_1$, $P_2$, $P_3$ and $P_4$ on the first curve CV1 are assumed to correspond to the figure elements $E_2$, $E_4$, $E_6$ and $E_8$ on the second curve CV2, respectively. Thus, the definition statement for the first curve CV1 is as follows:

```
CV1 = P_s ;                        ... starting point

       P_1 , MRK_1 , MRK_2 ;        ... G_1

       P_2 , MRK_3 , MRK_4 ;        ... G_2

       P_3 , MRK_5 , MRK_6 ;        ... G_3

       P_4 , MRK_7 , MRK_8 ;        ... G_4

       P_s ;                        ... G_5
```

The definition statement for the second curve CV2 is as follows:

3

$$CV2 = Q_s; \qquad \ldots \text{ starting point}$$

$$Q_1, \ MRK_1; \qquad \ldots E_1$$

$$C(x_1, y_1, r_1), \ CW, \ Q_2, \ MRK_2; \qquad \ldots E_2$$

$$Q_3, \ MRK_3; \qquad \ldots E_3$$

$$C(x_2, y_2, r_2), \ CW, \ Q_4, \ MRK_4; \qquad \ldots E_4$$

$$Q_5, \ MRK_5; \qquad \ldots E_5$$

$$C(x_3, y_3, r_3), \ CW, \ Q_6, \ MRK_6; \qquad \ldots E_6$$

$$Q_7, \ MRK_7; \qquad \ldots E_7$$

$$C(x_4, y_4, r_4), \ CW, \ Q_8, \ MRK_8; \qquad \ldots E_6$$

$$Q_s; \qquad \ldots E_9$$

The pitch definition statement is

CUT P, 5, 5

In the curve definition statements, $MRK_s$ (s = 1 - 8) represents a marking point command indicative of a marking point. Definition is such that a point on one curve including the two marking point commands will correspond to a figure element between two points on the other curve that include the respective marking point commands. For example, since the point $P_1$ on the first curve CV1 includes the two marking point commands $MRK_1$, $MRK_2$, the point $P_1$ corresponds to the figure element $E_2$ between the point (marking starting point) $Q_1$ on the second curve CV2 which includes the marking point command $MRK_1$ and the point (marking terminal point) $Q_2$ which includes the marking point command $MRK_2$.

Further, in the curve definition statements, C represents a circular arc, CW the clockwise direction (and CCW the counter-clockwise direction), and $x_1$, $y_1$, $r_1$ within the parentheses represent the center and radius of a circular arc.

Pitch in the direction of a driving line is specified by the first numerical value that follows the word address P indicative of partitioning pitch, and pitch in the direction of a base line is specified by the second numerical value. The directions of movement along the first and second curves indicated by the bold lines in Fig. 1A are the base line directions, and the directions (edge directions) indicated by the fine lines are the driving line directions.

(2) When the curve definition statements and pitch definition statement have been inputted, the processor 11a obtains the line lengths $L_{1i}$, $L_{2i}$ of each of the figure elements of curves CV1, CV2, and the total line lengths $L_1$, $L_2$ of the respective curves CV1, CV2 are calculated.

(3) Thereafter, of the curves having the lengths $L_1$ and $L_2$, the length of the longest is represented by L and L/P (where P is the pitch) is obtained. An integer nearest to but greater than L/P is adopted as the number of partitions M of the curve having the greatest length (referred as the "long curve"). In Fig. 1, the long curve is the second curve CV2.

(4) Next, $(L_{2j}/L) \cdot M$ is rounded off to obtain the number of partitions $M_j$ of each figure element $E_j$ of the long curve (the second curve) CV2.

(5) When the partitioning number $M_j$ has been obtained, the processor reads the data (the starting points $P_s$, $Q_s$ of the first and second curves) of the initial block from the curve definition statements of the first and second curves CV1, CV2 and stores these data in the RAM 11c as corresponding starting point data.

(6) After the starting point is stored, the operations $1 \to i$, $1 \to j$, $0 \to F$ are performed, where F is a flag indicating that a marking point command has been issued. Further, let the initial block of a curve definition statement be a 0th block, the next a 1st block, the one after that a 2nd block, and so on.

(7) Thereafter, the i-tb and j-th blocks (i-th and j-th figure elements) of the first and second curve definition statements are read.

(8) The processor checks whether a marking point command indicative of a marking starting point is present in the data read.

(9) If a marking point command specifying a marking starting point is present, the operation $1 \rightarrow F$ is performed.

(10) If a marking point command indicating a marking starting point is not present, or after the processing of step (9) has been performed, the i-th and j-th figure elements on the first and second curves are each partitioned into $M_j$ segments and the partitioning points on the first and second curves are stored in the RAM 11c in corresponding relationship. Note that $M_j$ is the number of partitions of the j-th figure element of the second curve, which is the long curve.

(11) When the partitioning points of the i-th and j-th figure elements have been brought into correspondence, it is determined whether the condition flag $F = 1$ holds.

(12) When $F = 1$ does not hold, the operations $i + 1 \rightarrow i$, $j + 1 \rightarrow j$ are performed.

(13) Thereafter, a check is performed to determine whether a block defining a curve remains. If one does remain, processing from step (7) onward is repeated.

(14) If the aforementioned block does not remain, it is construed that the points on the first curve and the points on the second curve have been brought into correspondence, and NC data are created for moving a tool (inclusive of a wire in a wire electrical discharge machine) so as to successively traverse the corresponding points obtained. Processing is then ended.

(15) If $F = 1$ is found to hold at step (11), block number j of the long curve (the second curve in the example) is incremented by the operation $j + 1 \rightarrow j$.

(16) Thereafter, the data in the j-th block (the j-th figure element) is read from the curve definition statement of the long curve (the second curve).

(17) This is followed by obtaining the partitioning points on the second curve by partitioning the j-th figure element on the second curve into $M_j$ segments, and storing each partitioning point in the RAM 11c upon bringing it into correspondence with the marking starting point on the first curve.

In the example of Fig. 1, the 2nd figure element $E_2$ is partitioned into three segments, and the partitioning points $q_{11}$, $q_{12}$, $Q_2$ are stored in the RAM 11c upon being brought into correspondence with point $P_2$ on the first curve.

(18) Next, it is checked whether the j-th block includes a marking point command indicating a marking terminal point. If the command is not included in the block, processing is repeated from step (15) onward.

(19) If the block does include the marking point command indicating the marking terminal point, then the operation $0 \rightarrow F$ is performed and processing is executed from step (12) onward.

Thus, in accordance with the invention, a curved surface can be created simply and reliably even if the curved surface includes an edge portion in which one point on one curve specifying the upper or lower surface of a workpiece corresponds to a plurality of points on the other curve.

**Claims**

1. A method of machining the edge surface of a part having upper and lower surfaces of different peripheral shape, comprising creating NC data defining said edge surface by inputting first and second curves (CV1,CV2) specifying the peripheries of the upper and lower surfaces respectively, obtaining corresponding points ($P_i$,$Q_i$) on said first and second curves (CV1,CV2), and connecting the corresponding points on the two curves (CV1,CV2) thereby to define the edge surface to be machined, characterised by comprising:

a first step of specifying and inputting, in a curve definition statement, correspondence between a point ($P_1$) on one curve (CV1) and a figure element ($E_2$) on the other curve (CV2) in a case where, of first and second curves (CV1,CV2) formed by figure elements which are straight line segments or circular arcs, the point ($P_1$) on the one curve (CV1) corresponds to all points on at least said figure element ($E_2$) on the other curve (CV2), wherein the correspondence is specified by using two marking point commands ($MRK_1$,$MRK_2$) in each curve definition statement so that a point ($P_1$) on the one curve (CV1) including two marking point commands ($MRK_1$,$MRK_2$) corresponds to a figure element ($E_2$) between two points ($Q_1$,$Q_2$), on the other curve (CV2), which include one ($MRK_1$) of said two marking point commands for one ($Q_1$) of the two points, and the other ($MRK_2$) of said two marking point commands for the other ($Q_2$) of the two points;

a second step of partitioning the figure element ($E_2$) on the other curve (CV2) that corresponds to said point ($P_1$) on said one curve (CV1) by a predetermined partitioning number; and

a third step of forming an edge surface portion ($EG_1$) by connecting said point ($P_1$) on the one

curve (CV1) to all the partitioning points on the corresponding figure element ($E_2$) on the other curve (CV2).

2. A method according to claim 1, characterised by having a step of inputting a partitioning pitch together with the definition statements defining the first and second curves (CV1,CV2), obtaining a partitioning number M of the longer (CV2) of the first and second curves in accordance with L/P, where P represents the partitioning pitch and L represents the length of the longer curve (CV2), and obtaining a partitioning number $M_j$ of a j-th figure element ($E_2$) of said longer curve (CV2) on the basis of ($L_j \bullet M/L$), where $L_j$ represents the length of said figure element ($E_2$);

wherein the partitioning number obtained is the predetermined partitioning number in said second step.

3. A method according to claim 2, characterised by having a step of partitioning corresponding figure elements of the first and second curves by said partitioning number $M_j$ and establishing correspondence between figure element points on the first curve and figure element points on the second curve.

4. A method according to any preceding claim characterised by machining the edge surface by moving a tool so as to traverse a point ($P_1$) on said one curve (CV1) at the same time as it traverses the or each corresponding point on the other curve (CV2).

**Patentansprüche**

1. Verfahren zum Bearbeiten der Kantenoberfläche eines Teils, das obere und untere Oberflächen unterschiedlicher Umfangsformen hat, welches Verfahren umfaßt:

das Erzeugen von NC-Daten, welche die Kantenoberfläche definieren, durch Eingeben erster und zweiter Kurven (CV1, CV2), welche die Umfänge der oberen und unteren Oberflächen angeben,

das Gewinnen entsprechender Punkte ($P_i$, $Q_i$) auf den ersten und zweiten Kurven (CV1, CV2) und

das Verbinden der entsprechenden Punkte auf den zwei Kurven (CV1, CV2), um dadurch die Kantenoberfläche, welche zu bearbeiten ist, zu definieren,

**gekennzeichnet** durch

einen ersten Schritt zum Angeben und Eingeben im Rahmen einer Kurvendefinitions-Anweisung der Entsprechung eines Punkts ($P_1$) auf einer Kurve (CV1) und eines Figurelements ($E_2$) auf der anderen Kurve (CV2) in einem Fall, in dem bei den ersten und zweiten Kurven (CV1, CV2), die durch Figurelemente gebildet sind, welche Segmente aus Geraden oder Kreisbögen sind, der Punkt ($P_1$) auf der einen Kurve (CV1) allen Punkten auf zumindest dem Figurelement ($E_2$) auf der anderen Kurve (CV2) enspricht, wobei die Entsprechung durch Benutzen von zwei Markierungspunkt-Befehlen ($MRK_1$, $MRK_2$) in jeder Kurvendefinitions-Anweisung angegeben wird, so daß ein Punkt ($P_1$) auf der einen Kurve (CV1), der zwei Markierungspunkt-Befehle ($MRK_1$, $MRK_2$) beinhaltet, einem Figurelement ($E_2$) zwischen zwei Punkten ($Q_1$, $Q_2$) auf der anderen Kurve (CV2) entspricht, welche einen ($MRK_1$) der zwei Markierungspunkt-Befehle für einen ($Q_1$) der zwei Punkte und den anderen ($MRK_2$) der zwei Markierungspunkt-Befehle für den anderen ($Q_2$) der zwei Punkte beinhalten,

einen zweiten Schritt zum Unterteilen des Figurelements ($E_2$) auf der anderen Kurve (CV2), das dem Punkt ($P_1$) auf der einen Kurve (CV1) entspricht, durch eine vorbestimmte Unterteilungszahl, und

einen dritten Schritt zum Bilden eines Kantenoberflächenteils ($EG_1$) durch Verbinden des Punkts ($P_1$) auf der einen Kurve (CV1) mit allen Unterteilungspunkten auf dem entsprechenden Figurelement ($E_2$) auf der anderen Kurve (CV2).

2. Verfahren nach Anspruch 1, **gekennzeichnet** durch einen Schritt zum Eingeben eines Unterteilungsgrades zusammen mit den Definitions-Anweisungen, welche die ersten und zweiten Kurven (CV1, CV2) definieren, zum Gewinnen einer Unterteilungszahl M der längeren (CV2) der ersten und zweiten Kurven in Übereinstimmung mit der Größe L/P, wobei P den Unterteilungsgrad repräsentiert und L die Länge der längeren Kurve (CV2) repräsentiert, und zum Gewinnen einer Unterteilungszahl $M_j$ eines j-ten Figurelements ($E_2$) der längeren Kurve (CV2) auf der Grundlage der Größe ($Lj \bullet M/L$), wobei $L_j$ die Länge des Figurelements ($E_2$) repräsentiert, wobei die Unterteilungszahl, die gewonnen wird, die vorbestimmte Unterteilungszahl in dem zweiten Schritt ist.

3. Verfahren nach Anspruch 2, **gekennzeichnet** durch einen Schritt zum Unterteilen entsprechender Figurelemente der ersten und zweiten Kurven durch die Unterteilungszahl $M_j$ und zum Herstellen der Entsprechung zwischen Figurelement-Punkten auf der ersten Kurve und Figurelement-Punkten auf der zweiten Kurve.

**4.** Verfahren nach einem der vorhergehenden Ansprüche, **gekennzeichnet** durch das Bearbeiten der Kantenoberfläche durch Bewegen eines Werkzeugs derart, daß dieses einen Punkt (P₁) auf der einen Kurve (CV1) zur gleichen Zeit überquert, zu der es den oder jeden entsprechenden Punkt auf der anderen Kurve (CV2) überquert.

**Revendications**

**1.** Un procédé d'usinage de la surface du bord d'une pièce présentant des surfaces supérieure et inférieure de forme périphérique différente, comprenant la formation de données CN définissant ladite surface du bord en entrant de première et seconde courbes (CV1, CV2) spécifiant les périphéries des surfaces supérieure et respectivement inférieure, l'obtention de points correspondants (P$_i$, Q$_i$) sur lesdites première et seconde courbes (CV1, CV2), et la liaison des points correspondants sur les deux courbes (CV1, CV2) de manière ainsi à définir la surface du bord à usiner, caractérisé en ce qu'il comprend :
une première opération consistant à spécifier et à entrer, dans un énoncé de définition de courbes, une correspondance entre un point (P₁) sur une première courbe (CV1) et un élément de dessin (E₂) sur l'autre courbe (CV2) dans un cas où, parmi les première et seconde courbes (CV1, CV2) formés par des éléments de dessin qui sont des segments de ligne droite ou des arcs circulaires, le point (P₁) sur la première courbe (CV1) correspond à tous les points sur au moins ledit élément de dessin (E₂) de l'autre courbe (CV2), dans laquelle la correspondance est spécifiée en utilisant deux instructions de point de marquage (MRK₁, MRK₂) dans chaque énoncé de définition de courbe de sorte qu'un point (P₁) sur la première courbe (CV1) incluant deux instructions de point de marquage (MRK₁, MRK₂) correspond à un élément de dessin (E₂) entre deux points (Q₁, Q₂) de l'autre courbe (CV2), qui comprend l'une (MRK₁) desdites deux instructions de point de marquage pour l'un (Q₁) des deux points, et l'autre (MRK₂) desdites deux instructions de point de marquage pour l'autre (Q₂) des deux points ;
une deuxième opération consistant à diviser l'élément de dessin (E₂) de l'autre courbe (CV2) qui correspond audit point (P₁) de ladite première courbe (CV1) par un nombre prédéterminé de divisions ; et
une troisième opération consistant à former une portion de surface de bord (EG₁) en reliant ledit point (P₁) de la première courbe (CV1) à tous les points de division de l'élément de dessin correspondant (E₂) de l'autre courbe (CV2).

**2.** Un procédé selon la revendication 1, caractérisé en ce qu'il présente une opération consistant à entrer un pas de division en même temps que des énoncés de définition définissant les première et seconde courbes (CV1, CV2), obtenir un nombre M de divisions de la plus longue (CV2) des première et seconde courbes en accord avec L/P, où P représente le pas de division et L représente la longueur de la plus longue courbe (CV2), et obtenir un nombre M$_j$ de divisions d'un j-ième élément de dessin (E₂) de ladite plus longue courbe (CV2) sur la base de (L$_j$. M/L) où L$_j$ représente la longueur dudit élément de dessin (E₂) ;
dans lequel le nombre de divisions obtenu est le nombre de divisions prédéterminé dans ladite seconde opération.

**3.** Un procédé selon la revendication 2, caractérisé en ce qu'il présente une opération consistant à diviser des éléments de dessin correspondants des première et seconde courbes par ledit nombre de divisions M$_j$ et établir une correspondance entre des points des éléments de dessin de la première courbe et des points des éléments de dessin de la seconde courbe.

**4.** Un procédé selon une revendication précédente quelconque, caractérisé par le fait d'usiner la surface du bord en déplaçant un outil de façon à traverser un point (P₁) de ladite première courbe (CV1) en même temps qu'il traverse le ou chaque point correspondant de l'autre courbe (CV2).

## Fig. IA

## Fig. IB

## Fig. IC

# Fig. 2

# Fig. 3A

START

**(1)** SPECIFY 1st AND 2nd CURVES CV1, CV2 AND INPUT PITCH

**(2)** OBTAIN LENGTHS OF SEGMENTS OF CURVES CV1, CV2, TOTAL LENGTHS OF $L_{1i}$, $L_{2i}$ AND CURVES CV1, CV2 AND $L_1$, $L_2$

**(3)** OF $L_1$ AND $L_2$, REPRESENT LENGTH OF LONGEST BY L AND ADOPT INTEGER NEAREST TO BUT GREATER THAN L/P AS PARTITIONING NUMBER M OF LONG CURVE

**(4)** DECIDE PARTITIONING NUMBER $M_i$ OF EACH ELEMENT OF LONG CURVE ON BASIS OF $j = (L_{2j}/L) \cdot M$

**(5)** READ AND STORE STARTING POINTS OF FIRST AND SECOND CURVES

**(6)** $1 \rightarrow i$, $1 \rightarrow j$ "0" $\rightarrow$ F

B

**(7)** READ i-th AND j-th ELEMENTS

**(8)** MARKING STARTING POINT? — YES → **(9)** "1" $\rightarrow$ "F"

NO

**(10)** CALCULATE AND STORE PARTITIONING POINTS OF i-th AND j-th ELEMENTS

A

10

EP 0 253 900 B1

**Fig. 3B**

A

(11) F = "1" ? — YES →

NO ↓

(15) j + 1 → j

(16) READ j-th ELEMENT

(17) CALCULATE AND STORE PARTITIONING POINTS OF j-th ELEMENT

(18) IS THERE A MARKING END POINT ? — NO →

YES ↓ (19) "0" → F

(12) i + 1 → i / j + 1 → j

(13) END OF CURVES ? — NO → B

YES ↓

(14) CREATE NC DATA

END

**Fig. 4**

P₁, P₂, P₁, CV1, Q₁, Q₂, WK, Q₁, BT, CV2

**Fig. 5**

CV2, G8, S10, S9, G6, S6, S8, S4, G7, G4, S3, G5, CV1, S7, G3, S2, G2, G1, S6, S1

11